# EUROPÄISCHE PATENTSCHRIFT

(11) **EP 3 935 107 B1**
(45) Veröffentlichungstag und Bekanntmachung des Hinweises auf die Patenterteilung: **10.05.2023**
(21) Anmeldenummer: 20707124.2
(22) Anmeldetag: 04.03.2020
(51) Int. Cl.: C08L 77/02, C08L 77/06

(54) **POLYAMID-FORMMASSEN FÜR HOCHGLANZ-ANWENDUNGEN**
POLYAMIDE MOLDING COMPOSITION FOR HIGH-GLOSS APPLICATIONS
COMPOSITIONS DE MOULAGE EN POLYAMIDE POUR APPLICATIONS À BRILLANCE

(30) Priorität: 06.03.2019 EP 19161124
(43) Veröffentlichungstag der Anmeldung: 12.01.2022
(73) Patentinhaber: BASF SE, 67056 Ludwigshafen am Rhein (DE)
(72) Erfinder: XALTER, Rainer, 67056 Ludwigshafen (DE); ERDMANN, Torsten, 07407 Rudolstadt (DE); HOPFENSPIRGER, Xaver, 67056 Ludwigshafen (DE); MILIMONKA, Stefan, 67056 Ludwigshafen (DE)
(74) Vertreter: BASF IP Association
(86) Internationale Anmeldenummer: PCT/EP2020/055702
(87) Internationale Veröffentlichungsnummer: WO 2020/178342

(56) Entgegenhaltungen:
- EP-A1- 1 803 786
- EP-A1- 2 553 021
- EP-A1- 3 069 871
- WO-A1-2012/070598

## Beschreibung

Die Erfindung betrifft Polyamid-Formmassen für Hochglanz-Anwendungen, insbesondere im Automobil-Exterieur-Bereich. Die Formmassen sollen geeignet sein zur Herstellung unlackierter Hochglanz-Bauteile mit insbesondere guten Glanzeigenschaften, guter Zähigkeit und hoher Streusalz- und Waschstraßenbeständigkeit.

Polyamide gehören zu den weltweit in großem Umfang hergestellten Polymeren und dienen neben den Hauptanwendungsbereichen Folien, Fasern und Formkörpern (Werkstoffen) einer Vielzahl weiterer Verwendungszwecke. Unter den Polyamiden sind das Polyamid-6 (Polycaprolactam) und das Polyamid-66 (Nylon, Polyhexamethylenadipinsäureamid) die am meisten hergestellten Polymere. Die meisten technisch bedeutsamen Polyamide sind teilkristalline oder amorphe thermoplastische Polymere, die sich durch eine hohe Temperaturbeständigkeit auszeichnen. Die Oberflächeneigenschaften und intrinsische Streusalzbeständigkeiten lassen sich durch Abmischungen mit langkettigen Polyamiden verbessern.

JPS57212252 betrifft Mischungen aus Polyamid-6 mit 5 bis 35 Gew.-% Polyamid-6.10, die eine verbesserte Beständigkeit gegenüber Calciumchlorid aufweisen sollen.

CA 2 256 100 A1 betrifft Polyamid-Zusammensetzungen mit verbesserten Oberflächeneigenschaften und Witterungsbeständigkeiten. Die eingesetzten Polyamide weisen einen geringen Extrakt-Anteil auf und werden mit einem speziellen Ruß-Pigment und einem anorganischen Stabilisator sowie einem Verstärkungsstoff kombiniert.

JP2016124992 betrifft Polyamidharz-Zusammensetzungen, die gute mechanische Eigenschaften und ein gutes Erscheinungsbild von Formkörpern liefern sollen. Die Polyamidharze enthalten 30 bis 70 Gew.-% Glasfasern. Der extrapolierte Kristallisationsstartpunkt für die Formmasse beträgt 175 bis 200 °C.

JPH1029221 betrifft ein Verfahren zum Spritzgießen eines Automobiltürgriffs mit guten Oberflächeneigenschaften. Das Spritzgießen erfolgt in einer wärmeisolierten Gießform. Als Einsatzmaterial wird unter anderem Nylon genannt.

US 2004/0102559 A1 betrifft Polyamidharz-Zusammensetzungen, die 30 bis 70 Gewichtsteile eines anorganischen Füllstoffs enthalten und zusätzlich Ruß. Der anorganische Füllstoff umfasst Glasfasern und mindestens eine Spezies ausgewählt aus Wollastonit, Talkum, Kaolin und Glimmer.

EP 2 553 021 A0 / WO 2011/120949 A betrifft die Herstellung von spannungsriss- und korrosionsbeständigen Formteilen aus thermoplastischen Formmassen, die Polyamid 6.6, Polyamid 4.6, Polyamid 6 oder deren Mischungen und ein Polyamid mit einem Verhältnis von Methylenzu Amidgruppen von 7 bis 12 enthält. Ferner sind 1-50 Gew.-% faser- oder teilchenförmige Füllstoffe, Schmiermittel und Wärmestabilisatoren enthalten, darunter bevorzugt Glasfasern. In den Beispielen werden 30 Gew.-% Glasfasern eingesetzt.

WO 2012/070598 A1 betrifft eine Harzzusammensetzung, die Nylon-11- und/oder Ny-lon-1010-Harz und zusätzlich Nylon-6-Harz umfasst. Zudem umfasst die Zusammensetzung ein phosphorbasiertes Flammschutzmittel, das halogenfrei ist.

EP 1 803 786 A1 betrifft ein Oberbelagsmaterial auf Basis von PA 6/12, das neben einem Copolyamid PA 6/12 zusätzlich wenigstens ein Polyamid-Homopolymer ausgewählt aus der Gruppe PA 6, PA 12, PA 610 und/oder PA 612 enthält.

Zusätzlich können Zusatzstoffe einschließlich Gleitmitteln, Pigmenten und Farbstoffen mitverwendet werden. Die Oberbelagsmaterialien müssen einen Hauptteil an PA 6/12 enthalten, um auf Basis dieses Copolyamids gebildet zu sein.

EP 3 069 871 A1 betrifft einen Mehrschichtverbund mit einer EVOH-Schicht. Die erste Schicht enthält ein Copolyamid auf Basis von Hexamethylendiamin, Terephthalsäure und einer aliphatischen C8-19-Dicarbonsäure sowie ein olefinisches Copolymer als Schlagzähmodi-fier. Die zweite Schicht besteht aus einer Formmasse, die zu mindestens 60 Gew.-% aus EVOH besteht. Ferner ist eine dritte Schicht vorgesehen aus einer Polyamidformmasse.

Aufgabe der vorliegenden Erfindung ist die Bereitstellung von thermoplastischen Formmassen, die insbesondere geeignet sind zur Herstellung unlackierter Hochglanz-Bauteile im Automobil-Exterieur-Bereich mit guten Glanzeigenschaften, guter Zähigkeit und hoher Streusalz- und Waschstraßenbeständigkeit. Die Glanzeigenschaften sollen unter Einwirkung von Streusalz oder Waschstraßen möglichst unverändert beibehalten werden.

Die Aufgabe wird erfindungsgemäß gelöst durch eine thermoplastische Formmasse aus
a) einer Mischung aus 100 Gewichtsteilen Polyamid, das aliphatische unverzweigte C₁₀₋₁₂-Grundbausteine aufweist, und 5 bis 100 Gewichtsteilen Polyamid-6 und/oder Polyamid-6/6.6 als Komponente A),
b) 0 bis 10 Gew.-%, bezogen auf Komponente A), weiterer Zusatzstoffe als Komponente B), darunter 0 Gew.-%, bezogen auf Komponente A), an Glasfasern, dadurch gekennzeichnet, dass das Polyamid der Komponente A), das aliphatische unverzweigte C₁₀₋₁₂-Grundbausteine aufweist, Polyamid-6.10 ist.

Die Aufgabe wird zudem gelöst durch ein Verfahren zur Herstellung derartiger Formmassen, bei dem man die Komponenten A) und B) und gegebenenfalls weitere Inhaltsstoffe miteinander vermischt.

Die Aufgabe wird zudem gelöst durch Verwendung der Formmassen zur Herstellung von Folien oder Formkörpern sowie durch entsprechende Folien oder Formkörper.

Die Aufgabe wird zudem gelöst durch die Verwendung von Mischungen aus 100 Gewichtsteilen Polyamid, das aliphatische unverzweigte C₁₀₋₁₂-Grundbausteine aufweist, und 5 bis 100 Gewichtsteilen Polyamid-6 und/oder Polyamid-6/6.6 in Formkörpern zur Verbesserung der Glanzeigenschaften unter bzw. bei Streusalz- und/oder Waschstraßeneinwirkung auf die Formkörper.

Vorzugsweise weisen die Folien oder Formkörper dabei einen Graumaßstab in der Graumaßstab-Bewertung gemäß ISO 105 A02 nach Test gemäß DBL 5416, 7.3, von mindestens 4, vorzugsweise 4, 4 bis 5 oder 5 nach dem Test auf.

Die thermoplastischen Formmassen enthalten als Komponente A) eine Mischung aus 100 Gewichtsteilen Polyamid, das aliphatische unverzweigte C₁₀₋₁₂-Grundbausteine aufweist, und 5 bis 100 Gewichtsteilen Polyamid-6 und/oder Polyamid-6/6.6.

Bei Polyamid-6/6.6 handelt es sich um ein Copolyamid mit beliebigen Anteilen an Monomeren des Polyamid-6 und Polyamid-6.6 oder eine Mischung beider Polyamide. Beide Komponenten können in gleichen Mol-Anteilen, im Überschuss oder Unterschuss, eingesetzt werden. Zudem können auch Mischungen von Polyamid-6 und Polyamid-6.6 eingesetzt werden. Besonders bevorzugt wird neben Polyamid-6 jedoch ein Copolyamid-6/6.6 eingesetzt.

Komponente A) enthält neben dem Polyamid-6 und/oder Polyamid-6/6.6 mindestens ein Polyamid, das aliphatische unverzweigte C₁₀₋₁₂-Grundbausteine aufweist. Dabei handelt es sich um Polyamid-6.10. Bei der Verwendung von Mischungen aus 100 Gewichtsteilen Polyamid, das aliphatische unverzweigte C₁₀₋₁₂-Grundbausteine aufweist, und 5 bis 100 Gewichtsteilen Polyamid-6 oder Polyamid-6/6.6 in Formkörpern zur Verbesserung der Glanzeigenschaften unter Streusalz- und/ oder Waschstraßeneinwirkung auf die Formkörper kann es sich bei dem Polyamid, das aliphatische unverzweigte C₁₀₋₁₂-Grundbausteine aufweist, um ein Homo- oder Copolyamid handeln. Beispielsweise können ein Teil oder die Gesamtmenge an Dicarbonsäure und/oder Diamin aliphatische unverzweigte C₁₀₋₁₂-Dicarbonsäure oder aliphatische unverzweigte C₁₀₋₁₂-Diamine sein. Es handelt sich dabei insbesondere um aliphatische unverzweigte endständige C₁₀₋₁₂-Dicarbonsäuren oder -Diamine. Es kann sich auch um entsprechende C₁₀₋₁₂-Lactame oder Aminonitrile handeln, die zu entsprechenden Grundbausteinen im Polyamid führen. Vorzugsweise ist die Gesamtmenge an Diamin oder Dicarbonsäure aliphatisches unverzweigtes endständiges C₁₀₋₁₂-Diamin oder -Dicarbonsäure. Vorzugsweise ist das Polyamid ausgewählt aus Polyamid-6.10, Polyamid-6.12, Polyamid-12.12, Polyamid-11, Polyamid-12 und Gemischen davon. Besonders bevorzugt ist dabei Polyamid-6.10.

Sofern das Polyamid nicht nur aliphatische unverzweigte C₁₀₋₁₂-Grundbausteine aufweist, sind die anderen Grundbausteine vorzugsweise C₄₋₁₂-Grundbausteine, insbesondere C₆₋₁₂-Grundbausteine, die vorzugsweise ebenfalls aliphatisch und unverzweigt, und insbesondere endständig sind.

Das Polyamid-6.10 hat vorzugsweise die folgenden Eigenschaften:
VZ = 120 bis 250 mL/g, bestimmt nach DIN ISO 307 (2007/2008).

Insbesondere werden erfindungsgemäß Polyamid-6 und Copolymere oder Mischungen davon mit Polyamid-66 eingesetzt. Bevorzugt besitzt das Polyamid-6 oder Polyamid-66 eine Viskositätszahl von im Bereich von 80 bis 200 ml/g, insbesondere 100 bis 180 ml/g, insbesondere 120 bis 170 ml/g, bestimmt in einer 0,5 gew.-%igen Lösung in 96 gew.-%iger Schwefelsäure bei 25 °C gemäß ISO 307.

In der Komponente A) beträgt der Anteil des Polyamid-6 und/oder Polyamid-6/6.6 vorzugsweise 10 bis 80 Gewichtsteile, besonders bevorzugt 10 bis 70 Gewichtsteile. Die Mengen beziehen sich dabei auf die Summe von Polyamid-6 und Polyamid-6/6.6 bzw. auf die Einzelsubstanzen bei Verwendung von Einzelsubstanzen.

Als Komponente B) oder Teil davon können die erfindungsgemäßen Zusammensetzungen 0 bis 10 Gew.-% weiterer Zusatzstoffe enthalten. Bei der Mitverwendung derartiger Zusatzstoffe beträgt die Mindestmenge 0,1 Gew.-%, vorzugsweise 0,2 Gew.-%, insbesondere 0,5 Gew.-%, bezogen auf die thermoplastische Formmasse.

Als weitere Zusatzstoffe kommen von Komponente A) verschiedene thermoplastische Polymere, von Glasfasern verschiedene Füll- und Verstärkungsstoffe oder weitere Additive in Betracht.

In den nachfolgend aufgeführten, als Komponente B) geeigneten Zusatzstoffen beziehen sich die jeweiligen Gewichtsprozente auf Komponente A). Bei Vorliegen mehrerer Zusatzstoffe gilt die eingangs genannte Obergrenze für die Summe der Mengen aller Zusatzstoffe.

Als Komponente B) oder Teil davon können die thermoplastischen Formmassen mindestens ein von Polyamiden der Komponente A) unterschiedliches thermoplastisches Polyamid enthalten. Vorzugsweise sind aber keine weiteren Polyamide enthalten.

Diese Polyamide weisen im Allgemeinen eine Viskositätszahl von 80 bis 100, vorzugsweise 100 bis 160 ml/g auf, bestimmt in einer 0,5 gew.-%igen Lösung in 96,0 gew.-%iger Schwefelsäure bei 25 °C gemäß ISO 307.

Halbkristalline oder amorphe Harze mit einem Molekulargewicht (Gewichtsmittelwert) von mindestens 5.000, wie sie z. B. in den amerikanischen Patentschriften 2,071,250, 2,071,251, 2,130,523, 2,130,948, 2,241,322, 2,312,966, 2,512,606 und 3,393,210 beschrieben werden, sind bevorzugt.

Beispiele hierfür sind Polyamide, die sich von Lactamen mit 8 bis 13 Ringgliedern ableiten, wie Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10, Kohlenstoffatomen und aromatische Dicarbonsäuren einsetzbar. Hier seien nur Adipinsäure, Azelainsäure, Sebacinsäure, Dodecandisäure, Cyclohexandicarbonsäure und Terephthal- und/oder Isophthalsäure als Säuren genannt.

Als Diamine eignen sich besonders Alkandiamine mit 6 bis 12, insbesondere 6 bis 9, Kohlenstoffatomen sowie m-Xylylendiamin, Di-(4-aminophenyl)methan, Di-(4-amino-cyclohexyl)-methan, 2,2-Di-(4-aminophenyl)-propan, 2,2-Di-(4-aminocyclohexyl)-propan oder 1,5-Diamino-2-methylpentan.

Außerdem seien auch noch Polyamide erwähnt, die z. B. durch Kondensation von 1,4-Diaminobutan mit Adipinsäure unter erhöhter Temperatur erhältlich sind (Polyamid 4,6), oder Polyamid 4T. Herstellungsverfahren für Polyamide dieser Struktur sind z. B. in den EP-A-38 094, EP-A-38 582 und EP-A-039 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Geeignete Polyamide haben vorzugsweise einen Schmelzpunkt von weniger als 265 °C oder haben amorphen Charakter.

Die nachfolgende, nicht abschließende Aufstellung enthält die genannten sowie weitere Polyamide im Sinne der Erfindung (einschließlich Komponente A)) und die enthaltenen Monomeren.

### AB-Polymere:

| | |
|---|---|
| PA 4 | Pyrrolidon |
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

### AA/BB-Polymere:

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA MXD6 | m-Xylylendiamin, Adipinsäure |
| PA 9T | Nonamethylendiamin, Terephthalsäure |

### AA/BB-Polymere:

| | |
|---|---|
| PA6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PAPACM 12 | Diaminodicyclohexylmethan, Laurinlactam |
| PA 6I/6T/PACMT | wie PA 6I/6T + Diaminodicyclohexylmethan, Terephthalsäure |
| PA 6T/6I/MACMT | wie PA 6I/6T + Dimethyldiaminocyclohexylmethan, Terephthalsäure |
| PA 6T/6I/MXDT | wie PA 6I/6T + m-Xylylendiamin, Terephthalsäure |
| PA 12/MACMI | Laurinlactam, Dimethyldiaminodicyclohexylmethan, Isophthalsäure |
| PA 12/MACMT | Laurinlactam, Dimethyldiaminodicyclohexylmethan, Terephthalsäure |
| PA PDA-T | Phenylendiamin, Terephthalsäure |
| PA 6T/6I | (siehe PA 6T und PA 6I) |
| PA 6T/66 | (siehe PA 6T und PA 66) |

Komponente B) ist gegebenenfalls ein Blend aus mindestens einem aliphatischen Polyamid und mindestens einem teilaromatischen oder aromatischen Polyamid.

Neben oder anstelle von Polyamid-6I/6T können auch Polyamid-6I oder Polyamid-1.5I/1.5T auf Basis von Methylpentamethylendiamin und Isophthalsäure bzw. Terephthalsäure oder Gemische davon eingesetzt werden sowie thermoplastische Elastomere auf Polyamid-Basis.

Beispielsweise kann auch ein Copolyamid hergestellt durch Polymerisation der Komponenten
A') 15 bis 84 Gew.-% mindestens eines Lactams,
B') 16 bis 85 Gew.-% eines Monomergemisches (M), das die Komponenten
   B1') mindestens eine C₃₂-C₄₀-Dimersäure und
   B2') mindestens ein C₄-C₁₂-Diamin enthält,

wobei die Gewichtsprozente der Komponenten A') und B') jeweils bezogen sind auf die Summe der Gewichtsprozente der Komponenten A') und B'),
mitverwendet werden. Besonders bevorzugt ist als derartige Komponente PA6/6.36.

Zusätzlich zum vorstehenden Polyamid bzw. Komponente A) können weitere Polymere mitverwendet werden.

Die von Komponente A) verschiedenen thermoplastischen Polymere sind vorzugsweise ausgewählt unter
- Homo- oder Copolymeren, die in einpolymerisierter Form wenigstens ein Monomer enthalten, das ausgewählt ist unter C₂-C₁₀ Monoolefinen, wie beispielsweise Ethylen oder Propylen, 1,3-Butadien, 2-Chlor-1,3-Butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten, wie beispielsweise Styrol, Acrylnitril, Methacrylnitril, α,β-ethylenisch ungesättigten Mono- und Dicarbonsäuren, und Maleinsäureanhydrid,
- Homo- und Copolymeren von Vinylacetalen,
- Polyvinylestern,
- Polyestern, wie Polyalkylenterephthalaten, Polyhydroxyalkanoaten (PHA), Polybutylensuccinaten (PBS), Polybutylensuccinatadipaten (PBSA),
- Polyethern,
- Polyetherketonen,
- Polysulfiden,
- Polysulfonen,
- Polyethersulfonen,
- Cellulosealkylestern
und Mischungen davon.

Zu nennen sind beispielsweise Polyacrylate mit gleichen oder verschiedenen Alkoholresten aus der Gruppe der C₄-C₈-Alkohole, besonders des Butanols, Hexanols, Octanols und 2-Ethylhexanols, Polymethylmethacrylat (PMMA), Methylmethacrylat-Butylacrylat-Copolymere, AcrylnitrilButadien-Styrol-Copolymere (ABS), Ethylen-Propylen-Copolymere, Ethylen-Propylen-Dien-Copolymere (EPDM), Polystyrol (PS), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA), Polyoxymethylen (POM), Polyvinylalkohol (PVAL), Polyvinylacetat (PVA), Polyvinylbutyral (PVB), Polycaprolacton (PCL), Polyhydroxybuttersäure (PHB), Polyhydroxyvaleriansäure (PHV), Polymilchsäure (PLA), Ethylcellulose (EC), Celluloseacetat (CA), Cellulosepropionat (CP) oder Cellulose-Acetat/Butyrat (CAB).

Der Begriff "Füllstoff und Verstärkungsstoff" (= mögliche Komponente B)) wird im Rahmen der Erfindung breit verstanden und umfasst partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z. B. Glaskugeln, nanoskalige Füllstoffe, wie Kohlenstoff-Nanoröhren (carbon nanotubes), nanoskalige Schichtsilikate, nanoskaliges Aluminiumoxid (Al₂O₃) oder Bariumsulfat, nanoskaliges Titandioxid (TiO₂), Graphen, dauerhaft magnetische bzw. magnetisierbare Metallverbindungen und/oder Legierungen, Schichtsilikate und nanoskaliges Siliciumdioxid (SiO₂), eingesetzt werden. Die Füllstoffe können auch oberflächenbehandelt sein.

Als Schichtsilikate können in den erfindungsgemäßen Formmassen z. B. Kaoline, Serpentine, Talkum, Glimmer, Vermiculite, Illite, Smectite, Montmorillonit, Hectorit, Doppelhydroxide oder Gemische davon eingesetzt werden. Die Schichtsilikate können oberflächenbehandelt oder unbehandelt sein.

Weiterhin können - weniger bevorzugt - ein oder mehrere Faserstoffe zum Einsatz kommen. Diese sind vorzugsweise ausgewählt aus bekannten anorganischen Verstärkungsfasern, wie Borfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Als Komponente B) oder Teil davon können die thermoplastischen Formmassen keine Glasfasern enthalten.

Geeignete bevorzugte Additive B) sind Entformungshilfsmittel und Wärmestabilisatoren, aber auch Flammschutzmittel, Lichtschutzmittel (UV-Stabilisatoren, UV-Absorber oder UV-Blocker), Farbstoffe, Ruß, Nukleierungsmittel, organische oder anorganische Pigmente oder metallische Pigmente, Metallflitter, metallbeschichtete Partikel, Antistatika, Leitfähigkeitsadditive, Entformungsmittel, optische Aufheller, Entschäumer, etc. Das Farbmittel wird erfindungsgemäß in einer Menge von 0,05 bis 10 Gew.-%, vorzugsweise 0,1 bis 5 Gew.-%, bezogen auf die gesamte Formmasse.

Als Komponente B) kann auch Ruß mitverwendet werden. Beispielsweise enthalten die erfindungsgemäßen Zusammensetzungen 0,01 bis 5 Gew.-%, bevorzugt 0,05 bis 3 Gew.-%, vorzugsweise 0,01 bis 2,5 Gew.-% Ruß. Ruß (Carbon Black), auch als Industrieruß bezeichnet, ist eine Modifikation des Kohlenstoffs mit hohem Oberfläche-zu-Volumen-Verhältnis und besteht zu 80 bis 99,5 Gew.-% aus Kohlenstoff. Die spezifische Oberfläche von Industrieruß beträgt etwa 10 bis 1500 m²/g (BET). Der Ruß kann als Gasruß, Furnaceruß, Flammruß, Spaltruß oder Acetylenruß hergestellt sein. Der Korndurchmesser liegt im Bereich von 8 bis 500 nm, typischerweise 8 bis 110 nm. Ruß wird auch als Pigment Black 7 oder Lamp Black 6 bezeichnet. Farbruße sind nanoteilige Ruße, die durch ihre Feinheit zunehmend den braunen Grundton üblicher Ruße verlieren.

Als Komponente B) werden bevorzugt Pigmente einschließlich Effektpigmente, wie etwa Metallicpigmente, Perlglanzpigmente, Ruß, Farbstoffe, Schmiermittel und gegebenenfalls Wärme- und UV-Stabilisatoren eingesetzt. Flammschutzadditive werden vorzugsweise nicht eingesetzt. Die Mitverwendung von mineralischen Füllstoffen ist möglich. Der Einsatz von Glasfasern ist weniger bevorzugt, da sie den Oberflächenglanz der Bauteile verschlechtern können.

Die Komponente B) kann 0,1 bis 2 Gew.-%, vorzugsweise 0,1 bis 1 Gew.-% an Entformungshilfsmitteln enthalten.

Als Komponente B) können die erfindungsgemäßen Formmassen vorzugsweise 0,01 bis 3 Gew.-%, besonders bevorzugt 0,02 bis 2 Gew.-%, insbesondere 0,05 bis 1,0 Gew.-% mindestens eines Wärmestabilisators, bezogen auf das Gesamtgewicht der Zusammensetzung, enthalten.

Bevorzugt sind die Wärmestabilisatoren ausgewählt unter Kupferverbindungen, sekundären aromatischen Aminen, sterisch gehinderten Phenolen, Phosphiten, Phosphoniten und Mischungen davon.

Sofern eine Kupferverbindung verwendet wird, beträgt vorzugsweise die Menge an Kupfer 0,003 bis 0,5 Gew.-%, insbesondere 0,005 bis 0,3 Gew.-% und besonders bevorzugt 0,01 bis 0,2 Gew.-%, bezogen auf das Gesamtgewicht der Zusammensetzung.

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt 0,2 bis 1,5 Gew.-%, bezogen auf das Gesamtgewicht der Zusammensetzung.

Sofern Stabilisatoren auf Basis sterisch gehinderter Phenole verwendet werden, beträgt die Menge an diesen Stabilisatoren vorzugsweise 0,1 bis 1,5 Gew.-%, besonders bevorzugt 0,2 bis 1 Gew.-%, bezogen auf das Gesamtgewicht der Zusammensetzung.

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,1 bis 1 Gew.-%, bezogen auf das Gesamtgewicht der der Zusammensetzung.

Geeignete Verbindungen B) des ein- oder zweiwertigen Kupfers sind z. B. Salze des ein- oder zweiwertigen Kupfers mit anorganischen oder organischen Säuren oder ein- oder zweiwertigen Phenolen, die Oxide des ein- oder zweiwertigen Kupfers oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäure oder die Kupfersalze der aliphatischen Carbonsäuren. Besonders bevorzugt sind die einwertigen Kupferverbindungen CuCI, CuBr, Cul, CuCN und Cu₂O sowie die zweiwertigen Kupferverbindungen CuCl₂, CuSO₄, CuO, Kupfer(II)acetat oder Kupfer(II)stearat oder Kupfer(II)pyrophosphat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente B) zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, Kl, NaBr oder KBr, eingesetzt, wobei das molare Verhältnis von Metallhalogenid zu Kupferhalogenid 0,5 bis 20, bevorzugt 1 bis 10 und besonders bevorzugt 3 bis 7 beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard^{®} A), Addukte aus Phenylendiamin mit Linolensäure, 4,4'-Bis(α,α-dimethylbenzyl)diphenylamin (Naugard^{®} 445), N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4,4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert-butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit (Irganox^{®} 168: Handelsprodukt der Firma BASF SE).

Insbesondere bevorzugt wird auf den Einsatz von Glasfasern, Füll- und Verstärkungsstoffen verzichtet, da sie die optischen Eigenschaften der Formmassen beeinträchtigen können.

Die Herstellung der Polyamid-Formmassen erfolgt nach an sich bekannten Verfahren. Dazu zählt das Mischen der Komponenten in den entsprechenden Gewichtsanteilen.

Es ist auch möglich, Rezyklate der einzelnen Komponenten oder auch von Gemischen einzusetzen.

Vorzugsweise geschieht das Mischen der Komponenten bei erhöhten Temperaturen durch gemeinsames Vermengen, Vermischen, Kneten, Extrudieren oder Verwalzen. Die Temperatur beim Mischen liegt vorzugsweise in einem Bereich von 220 °C bis 360 °C, besonders bevorzugt von 240 bis 350 °C und speziell von 250 bis 340 °C. Dem Fachmann sind die geeigneten Verfahren bekannt.

### Formkörper

Des Weiteren betrifft die vorliegende Erfindung Formkörper, die unter Verwendung der erfindungsgemäßen Polyamid-Formmassen hergestellt werden.

Die Polyamid-Formmassen können zur Herstellung von Formteilen mittels beliebiger geeigneter Verarbeitungstechniken verwendet werden. Geeignete Verarbeitungstechniken sind insbesondere Spritzgießen, Extrusion, Coextrusion, Tiefziehen oder jede andere bekannte Kunststoff-Formgebungsmethode.

Bevorzugte thermoplastische Formmassen und Folien oder Formkörper daraus zeigen einen Graumaßstab in der Graumaßstab-Bewertung gemäß ISO 105 A02 nach Test gemäß DBL 5416, 7.3., von mindestens 4, vorzugsweise von 4, 4 bis 5, oder 5.

Die Polyamid-Formmassen eignen sich weiter vorteilhaft für eine Verwendung für Automobil-Formteile, zur Herstellung von Formteilen für Elektro- und Elektronikgeräte sowie für Formteile im Konsumgüterbereich.

Eine spezielle Ausführungsform sind Formkörper in Form oder als Teil eines Bauteils für den Automobilbereich.

Im Autoinnenraum ist eine Verwendung für Armaturentafeln, Lenkstockschalter, Sitzteile, Kopfstützen, Mittelkonsolen, Türmodule, im Autoaußenbereich für A-,B-, C- oder D-Säulenabdeckungen, Spoiler, Türgriff-Abdeckungen, Außenspiegelkomponenten, Scheibenwischerkomponenten, Scheibenwischerschutzgehäuse, Ziergitter, Deckleisten, Dachreling, Fensterrahmen, Schiebedachrahmen, Antennenverkleidung-Abdeckungen, Vor- und Rückleuchten, Kühlergrill sowie Karosserieaußenteile möglich.

Eine weitere spezielle Ausführungsform sind Formkörper als solche oder als Teil eines elektrischen oder elektronischen passiven oder aktiven Bauteils, eines Gehäusebestandteils, einer Folie, einer Leitung, insbesondere in Form oder als Teil eines Schalters.

Bevorzugt beinhaltet das Formteil Funktionselemente, die eine mechanische Zähigkeit erfordern. Beispiele solcher Funktionselemente sind Filmscharniere, Schnapphaken (Snap-in) und Federzungen.

Für den Küchen- und Haushaltsbereich ist der Einsatz der erfindungsgemäßen Polyamide zur Herstellung von Türgriffen oder Komponenten für Küchengeräte, wie z. B. von Fritteusen, Bügeleisen, sowie Anwendungen im Gartenbereich, z. B. Komponenten für Bewässerungssysteme oder Gartengeräte, möglich.

Die Herstellung der Polyamid-Formmasse zur Herstellung von Formteilen erfolgt nach an sich bekannten Verfahren. Auf die oben genannten Verfahren zur Herstellung der Polyamid-Zusammensetzung wird hier Bezug genommen. Dazu zählt das Mischen der Komponenten in den entsprechenden Gewichtsanteilen. Vorzugsweise geschieht das Mischen der Komponenten bei erhöhten Temperaturen durch gemeinsames Vermengen, Vermischen, Kneten, Extrudieren oder Verwalzen. Die Temperatur beim Mischen liegt vorzugsweise in einem Bereich von 220 bis 360 °C, besonders bevorzugt von 240 bis 350 °C und speziell von 250 bis 340 °C. Es kann vorteilhaft sein, einzelne Komponenten vorzumischen. Es ist weiterhin auch möglich, die Formteile aus einer deutlich unterhalb der Schmelztemperatur des Polyamids hergestellten physikalischen Mischung (Dryblend) vorgemischter Komponenten und/oder einzelner Komponenten direkt herzustellen. Die Temperatur beim Mischen beträgt dann vorzugsweise 0 bis 100 °C, besonders bevorzugt 10 bis 50 °C, insbesondere Umgebungstemperatur (25 °C). Die Formmassen können nach üblichen Verfahren, beispielsweise durch Spritzguss oder Extrusion, zu Formteilen verarbeitet werden.

Die Erfindung wird durch die nachfolgenden Beispiele näher erläutert. Alle Beispiele betreffen schwarz eingefärbte Compounds, die exemplarisch für alle weiteren möglichen Farben stehen. Schwarz ist der kritischste Farbton, vor allem hinsichtlich der Streusalz- und Waschstraßenbeständigkeit, da Oberflächenveränderungen bei schwarzen Formkörpern am deutlichsten erkennbar sind.

### Beispiele

### Materialien:

| | |
|---|---|
| PA 6.10: | Zytel^{®} RS LC3060 NC010 von DuPont |
| PA 6: | Ultramid^{®} B27 von BASF, VZ = 150 mL/g |
| PA 66/6: | Copolymer mit 85 Gew.-% PA66, 15 Gew.-% PA6, VZ = 145 mL/g, |
| PA 66: | Ultramid^{®} A27 von BASF, VZ = 150 mL/g |
| SAN: | Luran^{®} HH 120 SPF50 von Styrolution |
| Ruß: | Black Pearls^{®} 880 von Cabot |
| Calciumstearat: | Ceasit^{®} von Baerlocher |

### Charakterisierungsmethoden:

Kerbschlagzähigkeit gemäß ISO 179/1eU (2018 gültige Fassung);
Glanzbestimmung gemäß DIN EN ISO 2813 (2015);
Streusalzbeständigkeit gemäß Daimler-Norm DBL 5416, 7.3 (2011-02);
Waschstraßenfestigkeit gemäß DIN EN ISO 20566 (2013-06):
   - Waschbürste: Durchmesser 1000 mm, Breite 400 mm, Material Polyethylen, x-förmig und gespleißt, Borstenstärke 0,8 mm, Borstenlänge 440 mm, Eintauchtiefe 100 mm, Bürstendrehzahl 120 min⁻¹
   - Sprühdüsen: aus Edelstahl, Öffnungswinkel 60°, Durchflussrate Wasser 2,2 L/min bei 300 kPas
   - Vorschubgeschwindigkeit des Probentischs: (5 ± 0,2) m/min
   - Waschlösung: Suspension von 1,5 g Quarzmehl (mittlere Teilchengröße 24 µm) pro Liter Trinkwasser
   - Raumklima: Klimatisierter Raum mit (23 ± 2) °C und Luftfeuchte (50 ± 5) %
   - Durchführung der Prüfung: Die Proben wurden 16 h im Normklima konditioniert. Anschließend wurden die Nullwerte für den Glanz bestimmt. Die Probenplatten wurden dann auf dem Probentisch platziert und mit zehn Doppelhüben beansprucht. Anschließend wurden die Probenplatten mit kaltem Wasser gereinigt, dann mit einem geeigneten Lösemittel (z. B. Ethanol) und Tuch gesäubert und 10 min abgelüftet. Anschließend wurden die Glanzwerte der behandelten Proben gemessen
Graumaßstabbestimmung gemäß ISO 105 A02 (1993-09).

### Herstellung der Compounds:

### Ref. 2 bis 8, Beispiele 1 bis 6

Die in den vergleichenden sowie den ausführungsgemäßen Beispielen beschriebenen Kunststoff-Formmassen wurden hergestellt durch Schmelzemischen der einzelnen Komponenten in einem Zweiwellenextruder ZSK 26 MC der Firma Coperion bei einem Durchsatz von 25 kg/h und 260 °C Gehäusetemperatur. Die Schmelze wurde über eine 4 mm-Düse als Strang ausgetragen, in einem Wasserbad bis zur Granulierfähigkeit abgekühlt und granuliert.

### Herstellung der Prüfkörper:

### Ref. 1:

Prüfkörper für die Untersuchung der Kerbschlagzähigkeit wurden nach ISO 179-2/1 eA auf einer Spritzgießmaschine des Typs Arburg 420C bei einer Massetemperatur von ca. 240 °C und einer Werkzeugtemperatur von ca. 80 °C hergestellt. Platten der Dimension 60×60×2 mm³ für die Glanzbeurteilung sowie für die Prüfung der Streusalz- und Waschstraßenbeständigkeit wurden auf der gleichen Spritzgießmaschine bei denselben Temperaturen produziert unter Verwendung einer hochpolierten Gegenplatte.

### Ref. 2 bis 8, Beispiele 1 bis 6:

Prüfkörper für die Untersuchung der Kerbschlagzähigkeit wurden nach ISO 179-2/1 eA auf einer Spritzgießmaschine des Typs Arburg 420C bei einer Massetemperatur von ca. 280 °C und einer Werkzeugtemperatur von ca. 100 °C hergestellt. Platten der Dimension 60×60×2 mm³ für die Glanzbeurteilung sowie für die Prüfung der Streusalz- und Waschstraßenbeständigkeit wurden auf der gleichen Spritzgießmaschine bei einer Massetemperatur von ca. 270 °C und einer Werkzeugtemperatur von ca. 30 °C produziert unter Verwendung einer hochpolierten Gegenplatte.

Die Ergebnisse sind in der Tabelle 1 zusammengestellt.

### Bewertung der Ergebnisse:

Ref. 1: SAN (Luran^{®} HH 120 SPF50) ist ein marktübliche Produkt für Automobil-Außenteile in Hochglanz-Optik mit Klavierlack-Anmutung. Das Material weist einen sehr hohen Glanzwert auf; allerdings ist es sehr spröde und eignet sich damit nicht gut für Bauteile mit integrierter Funktionalität, wie z. B. Schnapphaken, oder für Crash-relevante Teile. Zudem weist es einen sehr geringen Glanzerhalt im Waschstraßentest auf.

Ref. 2 bis 4: Standard-Polyamide wie PA6, PA6.6 und PA6.6/6 weisen bei akzeptablen Glanzwerten deutlich höhere Zähigkeiten auf und auch eine wesentlich verbesserte Waschstraßenfestigkeit, jedoch ist die Streusalzbeständigkeit bei diesen Materialien gering.

Ref. 5: PA6.10 (Zytel^{®} RX LC3060) gewährleistet eine sehr gute Streusalzbeständigkeit. Die Verwendung von reinem PA6.10 führt jedoch zu einem geringerem Ausgangsglanz und verringertem Glanzerhalt gegenüber Standard-Polyamiden (Ref. 2 bis 4).

Ref. 6: Eine Mischung von 100 Teilen PA6.10 mit 25 Teilen PA6.6 ist beständig gegen Streusalz und weist gegenüber reinem PA6.10 eine verbesserte Waschstraßenfestigkeit auf, jedoch ist der Ausgangswert des Glanzes weiter erniedrigt.

Hochglänzend sind Oberflächen mit mindestens 88 Glanzeinheiten gemäß DIN EN ISO 2813 (2015).

Ref. 7 und 8: Mischungen von 100 Teilen PA6.10 mit 120 oder mehr Teilen PA6 und/oder PA6.6/6 zeigen eine deutlich reduzierte Streusalzbeständigkeit.

Beispiele 1 bis 6: Mischungen von 100 Teilen PA6.10 mit 5 bis 90 Teilen PA6 und/oder PA6.6/6 zeigen gegenüber reinem PA6.10 verbesserten Glanz und Glanzerhalt im Waschstraßentest, bei ähnlicher Zähigkeit und hoher Streusalzbeständigkeit (Graumaßstab mindestens 4 nach Test.

**Tabelle 1**

| | Ref. 1 | Ref. 2 | Ref. 3 | Ref. 4 | Ref. 5 | Ref. 6 | Ref. 7 | Ref. 8 | Bsp. 1 | Bsp. 2 | Bsp. 3 | Bsp. 4 | Bsp. 5 | Bsp. 6 |
|---|---|---|---|---|---|---|---|---|---|---|---|---|---|---|
| SAN | 100 | | | | | | | | | | | | | |
| PA 66 | | 99.2 | | | | 25 | | | | | | | | |
| PA 6 | | | 99.2 | | | | | | 25 | | | | | |
| PA 6.6/6 | | | | 99.2 | | | 120 | 160 | | 5 | 10 | 25 | 45 | 90 |
| PA6.10 | | | | | 99.2 | 100 | 100 | 100 | 100 | 100 | 100 | 100 | 100 | 100 |
| Ruß | | 0.5 | 0.5 | 0.5 | 0.5 | 0.5 | 0.5 | 0.5 | 0.5 | 0.5 | 0.5 | 0.5 | 0.5 | 0.5 |
| Calciumstearat | | 0.3 | 0.3 | 0.3 | 0.3 | 0.3 | 0.3 | 0.3 | 0.3 | 0.3 | 0.3 | 0.3 | 0.3 | 0.3 |
| Kerbschlagzähigkeit 23°C (kJ/m²) | 1.3 | 3.1 | 6.0 | 5.2 | 4.7 | 3.6 | 3.5 | 3.9 | 4.7 | 4.7 | 4.6 | 4.0 | 3.7 | 3.8 |
| Streusalzbeständigkeitstest gem. DBL 5416, 7.3 | kein Schaden | starke Rissbildung, Vergrauen | starke Rissbildung, Vergrauen | starke Rissbildung, Vergrauen | kein Schaden | kein Schaden | Leichte Vergrauung | Deutliche Vergrauung | kein Schaden | kein Schaden | kein Schaden | kein Schaden | kein Schaden | Minimale Vergrauung |
| Graumaßstab-Bewertung gem. ISO 105 A02 nach Test gem. DBL 5416, 7.3 | 5 | 1 | 1 | 1 | 5 | 5 | 3-4 | 3 | 5 | 5 | 5 | 5 | 4-5 | 4 |
| Glanz (%) bei 20° Winkel | 99.9 | 91.5 | 90.8 | 91.3 | 86.8 | 83.7 | 88.9 | 88.5 | 89.0 | 88.4 | 88.9 | 88.9 | 88.7 | 88.8 |
| Glanzbeibehaltung (20°) nach Waschstraßentest (%) | 14 | 37 | 42 | 42 | 25 | 36 | 36 | 38 | 35 | 27 | 32 | 33 | 33 | 34 |

## Patentansprüche

1. Thermoplastische Formmasse aus
a) einer Mischung aus 100 Gewichtsteilen Polyamid, das aliphatische unverzweigte C₁₀₋₁₂-Grundbausteine aufweist, und 5 bis 100 Gewichtsteilen Polyamid-6 und/oder Polyamid-6/6.6 als Komponente A),
b) 0 bis 10 Gew.-%, bezogen auf Komponente A), weiterer Zusatzstoffe als Komponente B), darunter 0 Gew.-%, bezogen auf Komponente A), an Glasfasern,
**dadurch gekennzeichnet, dass** das Polyamid der Komponente A), das aliphatische unverzweigte C₁₀₋₁₂-Grundbausteine aufweist, Polyamid-6.10 ist.

2. Thermoplastische Formmasse nach Anspruch 1, **dadurch gekennzeichnet, dass** Komponente A) 10 bis 80 Gewichtsteile Polyamid-6 und/oder Polyamid-6/6.6 enthält.

3. Thermoplastische Formmasse nach Anspruch 1 oder 2, **dadurch gekennzeichnet, dass** Komponente B) 0,1 bis 3 Gew.-%, bezogen auf Komponente A), Ruß enthält.

4. Thermoplastische Formmasse nach einem der Ansprüche 1 bis 3, **dadurch gekennzeichnet, dass** Komponente B) 0,01 bis 1 Gew.-%, bezogen auf Komponente A), an Schmiermitteln enthält.

5. Thermoplastische Formmassen nach einem der Ansprüche 1 bis 4, **dadurch gekennzeichnet, dass** sie 0 Gew.-%, bezogen auf Komponente A), anorganische Füll- und Verstärkungsstoffe aufweist.

6. Thermoplastische Formmasse nach einem der Ansprüche 1 bis 5, **dadurch gekennzeichnet, dass** sie einen Graumaßstab, bestimmt gemäß ISO 105 A02 nach Test gemäß DBL 5416, 7.3., von 4 oder höher, besonders bevorzugt von 4, 4 bis 5 oder 5, aufweist.

7. Verfahren zur Herstellung von Formmassen nach einem der Ansprüche 1 bis 6, **dadurch gekennzeichnet, dass** man die Komponenten A) und B) miteinander vermischt.

8. Verwendung der Formmassen nach einem der Ansprüche 1 bis 6 zur Herstellung von Folien oder Formkörpern.

9. Folien oder Formkörper aus einer Formmasse nach einem der Ansprüche 1 bis 6.

10. Verwendung von Mischungen aus 100 Gewichtsteilen Polyamid, das aliphatische unverzweigte C₁₀₋₁₂-Grundbausteine aufweist, und 5 bis 100 Gewichtsteilen Polyamid-6 und/oder Polyamid-6/6.6 in Formkörpern zur Verbesserung der Glanzeigenschaften unter Streusalz- und/oder Waschstraßeneinwirkung auf die Formkörper.

11. Verwendung nach Anspruch 10, **dadurch gekennzeichnet, dass** das Polyamid der Komponente A), das aliphatische unverzweigte C₁₀₋₁₂-Grundbausteine aufweist, ausgewählt ist aus Polyamid-6.10, Polyamid-6.12, Polyamid-12.12, Polyamid-11, Polyamid-12 und Gemischen davon.

12. Verwendung nach einem der Ansprüche 10 und 11, **dadurch gekennzeichnet, dass** die Formkörper einen Graumaßstab, bestimmt gemäß ISO 105 A02 nach Test gemäß DBL 5416, 7.3, von mindestens 4, vorzugsweise 4 bis 5, oder 5 aufweisen.

## Claims

1. A thermoplastic molding material composed of
a) a mixture of 100 parts by weight of polyamide comprising aliphatic unbranched C₁₀₋₁₂-foundational units and 5 to 100 parts by weight of polyamide 6 and/or polyamide 6/6,6 as component A),
b) 0% to 10% by weight, based on component A), of further additives as component B), including 0% by weight, based on component A), of glass fibers,
wherein the polyamide of component A) comprising aliphatic unbranched C₁₀₋₁₂-foundational units is polyamide 6,10.

2. The thermoplastic molding material according to claim 1, wherein component A) comprises 10 to 80 parts by weight of polyamide 6 and/or polyamide 6/6,6.

3. The thermoplastic molding material according to claim 1 or 2, wherein component B) comprises 0.1% to 3% by weight, based on component A), of carbon black.

4. The thermoplastic molding material according to any of claims 1 to 3, wherein component B) comprises 0.01% to 1% by weight, based on component A), of lubricants.

5. The thermoplastic molding material according to any of claims 1 to 4, wherein it comprises 0% by weight, based on component A), of inorganic fillers and reinforcing materials.

6. The thermoplastic molding material according to any of claims 1 to 5, wherein it has a gray scale, determined according to ISO 105 A02 after testing according to DBL 5416, 7.3, of 4 or more, particularly preferably of 4, 4 to 5 or 5.

7. A process for producing molding materials according to any of claims 1 to 6, wherein the components A) and B) are mixed with one another.

8. The use of the molding materials as claimed in any of claims 1 to 6 for producing films or shaped articles.

9. A film or shaped article made of a molding material according to any of claims 1 to 6.

10. The use of mixtures of 100 parts by weight of polyamide comprising aliphatic unbranched C₁₀₋₁₂-foundational units and 5 to 100 parts by weight of polyamide 6 and/or polyamide 6/6,6 in shaped articles for improving gloss properties upon exposure of the shaped articles to road salt and/or automatic carwashes.

11. The use according to claim 10, wherein the polyamide of component A) comprising aliphatic unbranched C₁₀₋₁₂-foundational units is selected from polyamide 6,10, polyamide 6,12, polyamide 12,12, polyamide 11, polyamide 12 and mixtures thereof.

12. The use according to either of claims 10 and 11, wherein the shaped articles have a gray scale, determined according to ISO 105 A02 after testing according to DBL 5416, 7.3, of at least 4, preferably 4 to 5, or 5.

## Revendications

1. Masse de moulage thermoplastique, constituée par
a) un mélange de 100 parties en poids de polyamide, qui présente des éléments de base aliphatiques, non ramifiés, en C₁₀₋₁₂ et de 5 à 100 parties en poids de polyamide-6 et/ou de polyamide-6/6.6 en tant que composant A),
b) 0 à 10% en poids, par rapport au composant A), d'autres additifs en tant que composant B), parmi lesquels 0% en poids, par rapport au composant A), de fibres de verre,
**caractérisée en ce que** le polyamide du composant A), qui présente des éléments de base aliphatiques, non ramifiés en C₁₀₋₁₂, est le polyamide-6.10.

2. Masse de moulage thermoplastique selon la revendication 1, **caractérisée en ce que** le composant A) contient 10 à 80 parties en poids de polyamide-6 et/ou de polyamide-6/6.6.

3. Masse de moulage thermoplastique selon la revendication 1 ou 2, **caractérisée en ce que** le composant B) contient 0,1 à 3% en poids, par rapport au composant A), de suie.

4. Masse de moulage thermoplastique selon l'une quelconque des revendications 1 à 3, **caractérisée en ce que** le composant B) contient 0,01 à 1% en poids, par rapport au composant A), d'agents lubrifiants.

5. Masse de moulage thermoplastique selon l'une quelconque des revendications 1 à 4, **caractérisée en ce qu'**elle présente 0% en poids, par rapport au composant A), de charges et de substances de renforcement inorganiques.

6. Masse de moulage thermoplastique selon l'une quelconque des revendications 1 à 5, **caractérisée en ce qu'**elle présente une échelle de gris, déterminée selon la norme ISO 105 A02 selon le test selon DBL 5416, 7.3, de 4 ou plus, de manière particulièrement préférée de 4, de 4 à 5 ou de 5.

7. Procédé pour la préparation de masses de moulage selon l'une quelconque des revendications 1 à 6, **caractérisé en ce qu'**on mélange les composants A) et B) l'un avec l'autre.

8. Utilisation des masses de moulage selon l'une quelconque des revendications 1 à 6 pour la production de feuilles ou de corps façonnés.

9. Feuilles ou corps moulés en un masse de moulage selon l'une quelconque des revendications 1 à 6.

10. Utilisation de mélanges constitués par 100 parties en poids de polyamide, qui présente des éléments de base aliphatiques, non ramifiés, en C₁₀₋₁₂ et par 5 à 100 parties en poids de polyamide-6 et/ou de polyamide-6/6.6 dans des corps moulés pour améliorer les propriétés de brillance sous l'action de sel de déneigement et/ou de stations de lavage sur les corps moulés.

11. Utilisation selon la revendication 10, **caractérisée en ce que** le polyamide du composant A), qui présente des éléments de base aliphatiques, non ramifiés en C₁₀₋₁₂, est choisi parmi le polyamide-6.10, le polyamide-6.12, le polyamide-12.12, le polyamide-11, le polyamide-12 et leurs mélanges.

12. Procédé selon l'une quelconque des revendications 10 et 11, **caractérisé en ce que** les corps moulés présentent une échelle de gris, déterminée selon la norme ISO 105 A02 selon le test selon DBL 5416, 7.3, d'au moins 4, de préférence de 4 à 5 ou de 5.
